# EUROPÄISCHE PATENTSCHRIFT

(11) **EP 0 623 818 B1**
(45) Veröffentlichungstag und Bekanntmachung des Hinweises auf die Patenterteilung: **10.12.1997**
(21) Anmeldenummer: 94104660.9
(22) Anmeldetag: 24.03.1994
(51) Int. Cl.: G01N 25/26, G01K 17/00

(54) **Bombenkalorimeter**
Bomb calorimeter
Calorimètre à bombe

(30) Priorität: 03.05.1993 DE 4314454
(43) Veröffentlichungstag der Anmeldung: 09.11.1994
(73) Patentinhaber: IKA ANALYSENTECHNIK GmbH, D-79423 Heitersheim (DE)
(72) Erfinder: Pinhack, Hubert, D-79423 Heitersheim (DE); Fuhrmann, Jürgen, Dipl.-Math., D-16303 Schwedt (DE); Gegg, Rolf, D-79111 Feiburg (DE)
(74) Vertreter: Schmitt, Hans, Dipl.-Ing.

(56) Entgegenhaltungen:
- EP-A- 0 059 641
- DE-A- 3 221 548
- DE-U- 9 306 616
- FR-A- 436 330
- GB-A- 2 059 585
- US-A- 3 451 267

## Beschreibung

Die Erfindung betrifft ein Bombenkalorimeter mit einem Aufschlußgefäß, dessen Innenraum als Reaktionsraum ausgebildet und dicht abschließbar ist, wobei das Aufschlußgefäß in einer Ummantelung auswechselbar angeordnet ist und zumindest einen Temperatursensor zum Messen der im Aufschlußgefäß erreichten Temperatur aufweist. Derartige Meßvorrichtungen werden zur Bestimmung des Brennwertes von festen und flüssigen Produktproben verwendet.

Bei vorbekannten kalorimetrischen Meßvorrichtungen, die nach dem adiabatischen Prinzip arbeiten, wird das Aufschlußgefäß in einen Kessel mit Wasser gestellt. Die Temperaturerhöhung des Wassers, ca. 3°C, wird gemessen und ist ein Maß für den Brennwert. Der aus Aufschlußgefäß und Wasserkessel bestehende Meßraum wird nach außen durch einen diesen Meßraum allseitig umgebenden Wassermantel abgeschirmt, dessen Temperatur durch Heizen-und Kühlen der Meßraumtemperatur nachgefahren wird. Die hohe Präzision dieser Geräteklasse wird durch einen hohen technischen Aufwand erreicht, trotzdem läßt sich ein Durchgriff der Umgebungstemperatur nicht vollständig vermeiden. Nachteilig ist ferner die erforderliche Meßzeit, die kaum unter 20 Minuten pro Messung zu bringen ist.

Demgegenüber zeichnen sich Meßvorrichtungen nach dem isothermen Prinzip dadurch aus, daß der mit Wasser gefüllte Kessel, in dem das Aufschlußgefäß steht, von einem thermisch stabilen Mantel umgeben ist, der die Energieübertragung von außen nach innen verhindern soll. Die Energie, die von dem mit Wasser gefüllten Kessel an den thermisch stabilen Mantel abgegeben wird, ist nicht erfaßbar. Dies führt bei Proben mit gleichem Energieinhalt, aber unterschiedlicher Brennzeit, zu unterschiedlichen Meßergebnissen. Die Meßzeit bei diesen Systemen ist nicht kürzer als bei dem adiabatischen Prinzip.

So kennt man aus der DE-OS 32 21 548 bereits ein Bombenkalorimeter, dessen als Aufschlußgefäß dienender Bombenkörper in einem Kalorimetergefäß untergebracht ist, das zwischen sich und dem Bombenkörper mit Wasser gefüllt ist. Dieses Kalorimetergefäß ist in einem Mantelgefäß untergebracht, dessen Temperatur konstant gehalten wird. Während der Verbrennung des Probenmaterials in dem vorbekannten Bombenkalorimeter wird die Wassertemperatur im Kalorimetergefäß mit Hilfe eines Temperaturfühlers erfaßt, so daß durch Auswerten der Temperaturverlaufskurve bei bekannter Wärmekapazität des Kalorimeters die Verbrennungswärme des Probenmaterials bestimmt werden kann. Nach dem Verbrennen einer Probe muß das im Kalorimetergefäß befindliche Wasser jedoch zunächst abgepumpt und der Bombenkörper aus dem Kalorimetergefäß herausgeschraubt werden, bevor eine neue Brennwert-Bestimmung durchgeführt werden kann. Auch wird bei diesem vorbekannten Bombenkalorimeter die Energie, die von dem mit Wasser gefüllten Kalorimetergefäß an das temperierte Mantelgefäß abgegeben wird, ebenfalls nicht erfaßt.

Aus der GB-A-2 059 585 ist ein Bombenkalorimeter zu erkennen, dessen Aufschlußgefäß nicht in einem Wasserkessel steht, sondern wird direkt von einem warmleitfähigen Material umgeben. Dieses steht in einem isolierenden Gehäuse.

Ähnlich wie die isothermen Meßvorrichtungen ist auch die nach dem isoperibolen Prinzip arbeitende Geräteklasse aufgebaut. Das Aufschlußgefäß steht jedoch nicht in einem Wasserkessel, sondern wird direkt von einem hochwertigen thermischen Isolator umgeben. Die Temperaturerhöhung des Aufschlußgefäßes wird mit einem Temperatursensor gemessen, sie liegt deutlich über der Temperaturerhöhung, die beim adiabatischen Meßprinzip oder beim isothermischen Meßprinzip beobachtet wird. Das sich stark erwärmende Aufschlußgefäß führt zu einem Energieeintrag in den Isolationsmantel, der weder gemessen werden kann noch beeinflußbar ist. An der dem Aufschlußgefäß zugewandten Innenwand des Isoliergefäßes entsteht eine Wärmefront, die in die Isolation hineinwandert. Die während nachfolgender Messungen entstandenen Wärmefronten überschneiden sich und je nach Temperaturniveau finden Energiereflektionen von früheren Messungen auf das Aufschlußgefäß statt. Somit werden Meßwertverfälschungen verursacht. Geräte, die nach diesem Prinzip konstruiert sind, ermöglichen kurze Meßzeiten bei eingeschränkter Genauigkeit.

Es besteht daher die Aufgabe, ein Bombenkalorimeter der eingangs erwähnten Art zu schaffen, das bei hoher Präzision mit kurzen Meßzeiten arbeitet und das in einem weiten Umgebungstemperaturbereich einsetzbar ist.

Die erfindungsgemäße Lösung dieser Aufgabe besteht bei dem Bombenkalorimeter der eingangs erwähnten Art in den Merkmalen des Patentanspruches 1.

Bei dem erfindungsgemäßen Bombenkalorimeter ist also das Aufschlußgefäß in einem Meßgefäß angeordnet, dessen Wandung zumindest bereichsweise aus einem gut wärmeleitfähigen Material besteht. Dieses Meßgefäß wird im weiteren Text als "Wärmesenke" bezeichnet. Der Abstand zwischen der Außenwand des Aufschlußgefäßes und der Innenwand der Wärmesenke ist mit Luft oder Gas gefüllt. Die Wärmesenke hat mindestens einen zweiten Temperatursensor zum Messen der sich im wärmeleitfähigen Wandungsbereich einstellenden Temperatur.

Auch bei dem erfindungsgemäßen Bombenkalorimeter ist ein Temperatursensor zum Messen der Temperatur des Aufschlußgefäßes vorgesehen. Der als Isolationsstrecke wirkende Luftraum zwischen der Außenwand des Aufschlußgefäßes und der Innenwand der Wärmesenke reduziert den Energieeintrag in die Wärmesenke beträchtlich. Die Temperaturerhöhung der Wärmesenke infolge des restlichen Energieeintrages wird mit einem weiteren zweiten Temperatursensor gemessen. Die gute Wärmeleitfähigkeit des entsprechenden Wandbereiches der Wärmesenke sorgt für eine schnelle und gleichmäßige Energieverteilung, so daß keine Wärmefronten, die von früheren Messungen herrühren, die aktuelle Messung verfälschen können. Auf die klassische Isolation des Aufschlußgefäßes bei herkömmlichen kalorimetrischen Meßvorrichtungen kann dadurch verzichtet werden. Da sich zwischen dem Aufschlußgefäß und der Wärmesenke des erfindungsgemäßen Bombenkalorimeters nur ein gasförmiges Zwischenmedium befindet, werden die gewonnenen Meßergebnisse nicht durch einen Energieeintrag in eine dazwischenliegende Isolationsschicht verfälscht. Die im Stand der Technik vorgesehene Isolation wird bei dem erfindungsgemäßen Bombenkalorimeter durch eine Wärmesenke ersetzt, bei der die in sie eingetragene Energie gemessen wird.

Aus der während des Abbrennens einer Produktprobe ermittelten Temperaturänderung, die mit Hilfe der sowohl im Aufschlußgefäß wie auch in der Wärmesenke angeordneten Temperatursensoren gemessen werden kann, läßt sich der Brennwert der Proben mit hoher Genauigkeit bestimmen. Der während einer Messung erfolgende Temperaturanstieg im Aufschlußgefäß verursacht über den als Wärmewiderstand dienenden Luftspalt einen Energietransport zur Wärmesenke. Die Temperatur der Wärmesenke wird gemessen.

Die sich geringfügig erwärmende Wärmesenke gibt Energie an die sie umgebende Luft ab. Um den Energieabtrag von der Wärmesenke an die Umgebungsluft reproduzierbar zu gestalten, ist es zweckmäßig, wenn die Wärmesenke von einem auf Abstand angebrachten Mantel umgeben wird, der zumindest äußere Luftströmungen von der Wärmesenke fernhält.

Um die Temperaturänderungen an Aufschlußgefäß und Wärmesenke in den entsprechenden Brennwert der Produktprobe umrechnen zu können, ist es vorteilhaft, wenn dem Bombenkalorimeter eine Rechen- und Steuereinheit zugeordnet ist, die mit den Temperatursensoren elektrisch verbunden ist. Diese Rechen- und Steuereinheit berücksichtigt die absolute Starttemperatur und den Temperaturverlauf während des Abbrennens der Produktprobe, der sich im Aufschlußgefäß und in der Wärmesenke ergibt. So ist eine Vorausberechnung des kalorimetrischen Meßergebnisses bereits vor Erreichen des Temperaturmaximums möglich. Dies ermöglicht kurze Meßzeiten.

Bei dem erfindungsgemäßen Bombenkalorimeter ist das Aufschlußgefäß in der Wärmesenke auswechselbar angeordnet. Gewöhnlich sind mehrere Aufschlußgefäße im Einsatz, wobei zum Beispiel während einer laufenden Messung ein weiteres Aufschlußgefäß für die nächste Messung vorbereitet werden kann. Dazu wird das mit der nächsten Probe und bereits mit Sauerstoff gefüllte Aufschlußgefäß in eine Temperaturvorrichtung gestellt, die dem Bombenkalorimeter zugeordnet ist und in der die Temperatur des Aufschlußgefäßes an die Temperatur der Wärmesenke angeglichen wird. Da die Temperatur der Wärmesenke abhängig ist von vorangegangenen Messungen und der Vorgeschichte des Bombenkalorimeters, ist sie für jede folgende Messung als Variable anzusehen. Die Temperiervorrichtung ist mit der Rechen- und Steuereinheit verbunden.

Dabei kann der Temperiervorrichtung ein eigener Temperatursensor im wärmeleitfähigen Bereich der Wärmesenke zugeordnet sein. In einer Ausführungsform des erfindungsgemäßen Bombenkalorimeters ist beispielsweise vorgesehen, daß an der Wärmesenke zwei zweite Temperatursensoren angeordnet sind, wobei der eine mit der Temperiervorrichtung und der andere mit der Rechen- und Steuereinrichtung verbunden ist. Während der eine Temperatursensor der Wärmesenke zum Messen der sich im wärmeleitfähigen Wandungsbereich einstellenden Temperatur vorgesehen ist, dient der andere Temperatursensor zum Nachführen der Temperiervorrichtung an die sich in der Wärmesenke jeweils einstellende Temperatur.

Um jedoch Ungenauigkeiten, die sich aus der Verwendung zweier Temperatursensoren in der Wärmesenke ergeben können, auszuschalten, ist es zweckmäßig, wenn ein gemeinsamer zweiter Temperatursensor vorgesehen ist, der vorzugsweise in einer nach außen hin offenen und im wärmeleitfähigen Wandungsbereich angeordneten Ausnehmung der Wärmesenke angeordnet ist. Bei dieser bevorzugten Ausführungsform ist also die Rechen- und Steuereinrichtung mit nur einem in der Wärmesenke angeordneten Temperatursensor elektrisch verbunden, der sowohl zur Ermittlung der während einer Messung in die Wärmesenke eingetragene Energie wie auch zum Steuern der Temperiervorrichtung verwendet wird.

Die Wärmesenke kann Wandungen aufweisen, die aus Metall oder dergleichen Vollmaterial, beispielsweise aus Aluminium hergestellt sind. Möglich ist aber auch, daß die Wärmesenke aus einer Kombination von festen und flüssigen Materialien besteht. Beispielsweise kann die Wärmesenke als doppelwandiges Gefäß ausgestaltet werden, bei dem zwischen den beiden Wänden der Doppelwand eine wärmeleitende Flüssigkeit vorgesehen ist, in der eine eventuelle Temperaturänderung mittels des Temperatursensors festzustellen ist.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

In der einzigen Figur ist ein Bombenkalorimeter gezeigt, das zur Brennwertbestimmung von festen und flüssigen Proben eingesetzt wird. Das Bombenkalorimeter 1 hat ein Aufschlußgefäß 2, das als Druckgefäß ausgelegt und dessen dicht abschließbarer Innenraum als Reaktionsraum 3 ausgebildet ist.

Zur Bestimmung des Brennwertes eines Stoffes wird eine abgewogene Teilmenge von ihm in den Reaktionsraum 3 des Aufschlußgefäßes 2 eingebracht, dort dicht abgeschlossen und unter hohem Sauerstoffdruck verbrannt. Die Temperaturerhöhung des Aufschlußgefäßes ist unter anderem ein Maß für die freiwerdende Energie, die gemessen werden soll. Zum Messen der Temperatur des Aufschlußgefäßes 2 ist ein Temperatursensor 5 vorgesehen.

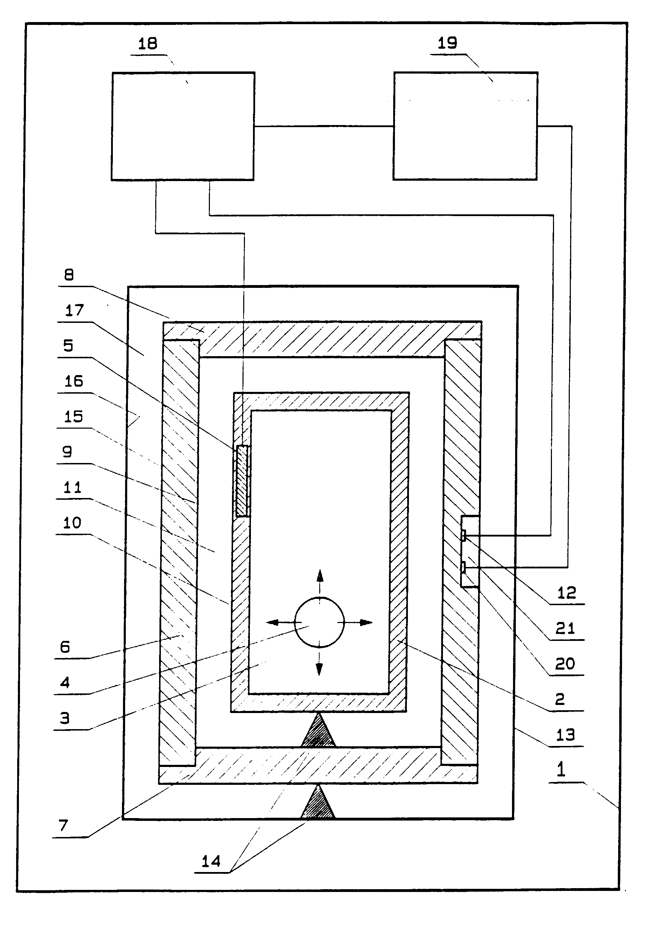

Wie die Fig.1 zeigt, ist das Aufschlußgefäß 2 in einer Ummantelung 6 angeordnet. Diese Ummantelung 6 wird nachfolgend als Wärmesenke 6 bezeichnet. Die Wandungen der Wärmesenke 6 bestehen aus einem gut wärmeleitenden Material mit hoher Wärmekapazität. Dazu ist die Wärmesenke 6 hier aus Aluminium mit großer Wanddicke hergestellt.

Um Luftkonvektionen während der Messung im Inneren der Wärmesenke 6 zu vermeiden, sind die oberen und unteren Stirnenden der Wärmesenke durch Deckelteile 7 und 8 verschlossen, so daß der Raum in der Wärmesenke 6 vom umgebenden Luftraum thermisch entkoppelt ist.

Der Temperaturanstieg des Aufschlußgefäßes 2 verursacht über den als Wärmewiderstand dienenden Luftspalt 11 einen geringen Energietransport zur Wärmesenke 6. Die gute Wärmeleitfähigkeit des für die Wärmesenke 6 verwendeten Materials sorgt für eine schnelle und gleichmäßige Energieverteilung in der Wärmesenke 6. Wärmefronten, die sich aus der endlichen Wärmeleitgeschwindigkeit zwangsläufig ergeben, verteilen sich bereits während der Messung und führen zu einer kleinen Temperaturänderung der Wärmesenke 6. Zum Messen der sich im wärmeleitfähigen Wandungsbereich der Wärmesenke 6 einstellenden Temperaturänderung ist ein zweiter Temperatursensor 12 vorgesehen, der in einer außenseitigen Einfräsung oder dergleichen Ausnehmung angeordnet sein kann.

Die Wärmesenke 6 ist in einem allseitig geschlossenen oder verschließbaren Isolationsgehäuse 13 über mehrere Isolationsstützen 14 befestigt. Dabei trennt der zwischen den Außenwänden 15 der Wärmesenke 6 und den Innenwänden 16 des Isolations- oder Außengehäuses 13 vorgesehene Luftspalt 17 die Wärmesenke 6 vom Außengehäuse 13.

Die Wärmesenke 6 kann aus Metall bestehende Wandungen aufweisen, möglich ist aber auch, daß die Wärmesenke beispielsweise als doppelwandiges Gefäß hergestellt wird. Zwischen den beiden Wänden der Doppelwand kann eine wärmeleitende Flüssigkeit vorgesehen sein. Dabei kann die Temperaturmessung auch in der Flüssigkeit stattfinden, wenn der Temperatursensor 12 in die Flüssigkeit eintaucht.

Die feste oder flüssige Stoffprobe, deren Brennwert bestimmt werden soll, wird außerhalb der Meßvorrichtung 1 in das Aufschlußgefäß 2 eingebracht. Das Aufschlußgefäß 2 wird mit Sauerstoff gefüllt. Danach wird das Aufschlußgefäß in die Wärmesenke 6 gestellt. Durch Schließen der Deckelplatte 8 der Wärmesenke 6 und Verschließen des Isolationsgehäuses 13 ist das Aufschlußgefäß 2 in dieser Ummantelung praktisch allseitig gekapselt. Nach dem Zünden der Stoffprobe im Reaktionsraum 3 des Aufschlußgefäßes wird der Temperaturanstieg des Aufschlußgefäßes 2 mit Hilfe des Temperatursensors 5 ermittelt.

Die Rechen- und Steuereinheit berechnet aus der absoluten Starttemperatur, dem Temperaturverlauf des Aufschlußgefäßes 2 und der Wärmesenke 6 den Brennwert.

Die exakte Messung des Temperaturverlaufes in Aufschlußgefäß 2 und Wärmesenke 6 ermöglicht es, den weiteren Temperaturverlauf im voraus zu berechnen und dabei das kalorimetrische Meßergebnis bereits vor Erreichen des Temperaturmaximums des Aufschlußgefäßes mathematisch zu ermitteln. Dadurch werden kurze Meßzeiten ermöglicht.

Während eine Messung mit einem Aufschlußgefäß 2 läuft, kann ein zweites Aufschlußgefäß 2 für die nachfolgende Messung vorbereitet werden. Der Meßvorrichtung 1 ist dazu eine Temperiervorrichtung 19 zugeordnet, die insbesondere als Kühlvorrichtung ausgebildet ist. In dieser Temperiervorrichtung 19 kann das nächste Aufschlußgefäß 2 auf die aktuelle Temperatur der Wärmesenke 6 temperiert werden. Das zu temperierende Aufschlußgefäß 2 wird dazu in die Temperiervorrichtung 19 eingesetzt. Um die entsprechende Temperaturvorgabe der Wärmesenke 6 für die Temperiervorrichtung 19 ermitteln zu können, ist diese mit einem weiteren Temperatursensor 20 elektrisch verbunden, der neben dem Temperatursensor 12 in der Ausnehmung 21 der Wärmesenke 6 angeordnet ist.

Die Temperiervorrichtung 19 kann eine eigene elektronische Regelungseinrichtung aufweisen. Bevorzugt wird jedoch eine Ausführungsform, bei der die Temperiervorrichtung 19 mit der Rechen- und Steuereinheit 18 in Steuerverbindung steht, wobei die Rechen- und Steuereinheit 18 ebenfalls mit dem der Temperiervorrichtung zugeordneten Temperatursensor 20 elektrisch verbunden ist.

Um die durch die Verwendung von zwei Temperatursensoren 12 und 20 in der Wärmesenke 6 bedingten Meßwertunterschiede zu vermeiden, kann es zweckmäßig sein, nur einen zweiten Temperatursensor 12 oder 20 in der Wärmesenke vorzusehen, der sowohl der Brennwertbestimmung wie auch der Temperaturvorgabe für die Temperiervorrichtung 19 dient.

Wenn das in der Temperiervorrichtung 19 für die Messung vorbereitete Aufschlußgefäß 2 zur Brennwertbestimmung in die Wärmesenke 6 der Meßvorrichtung 1 eingebracht wird, haben beide Gefäße 2 und 6 annähernd die gleiche Temperatur. Nach einer vergleichsweise kurzen Ausgleichszeit kann mit der Messung begonnen werden. Obwohl die Temperatur der Wärmesenke 6 eine Variable ist, erfolgt der Start der Messung bei exakt bestimmbaren Anfangsbedingungen.

Die Meßvorrichtung 1 zeichnet sich durch gute Reproduzierbarkeit der gemessenen Brennwerte auch bei stark schwankenden Umgebungstemperaturen aus. Trotz des vergleichsweise geringen Aufwandes an Isolationsmitteln können in der Meßvorrichtung 1 Brennwertbestimmungen mit hoher Präzision und kurzer Meßzeit, kleiner 5 Minuten, realisiert werden. Dabei sind vergleichsweise große Temperaturänderungen des Aufschlußgefäßes 2 während der Brennwertbestimmung zulässig.

## Patentansprüche

1. Bombenkalorimeter mit einem Aufschlußgefäß (2), dessen Innenraum als Reaktionsraum ausgebildet und dicht abschließbar ist, wobei das Aufschlußgefäß (2) in einer Ummantelung (6) auswechselbar angeordnet ist und zumindest einen Temperatursensor (5) zum Messen der im Aufschlußgefäß erreichten Temperatur aufweist, bei dem die Ummantelung (6), die das Aufschlußgefäß (2) umgibt, als Wärmesenke (6) ausgebildet ist und zumindest bereichsweise aus gut wärmeleitfähigem Material mit hoher Wärmekapazität besteht, dadurch gekennzeichnet, daß die Innenwände (9) und die Außenwände (15) der Wärmesenke (6) von den Außenwänden (10) des Aufschlußgefäßes (2) und den Innenwänden eines Außengehäuses (13) unter Bildung von thermischen Isolationsräumen (11, 17) beabstandet sind und daß sich im Wandungsbereich der Wärmesenke mindestens ein zweiter Temperatursensor (12, 20) befindet, der mit einer Temperiervorrichtung (19) für das Aufschlußgefäß (2) und mit einer Rechen- und Steuereinrichtung (18) verbunden ist.

2. Kalorimeter nach Anspruch 1, dadurch gekennzeichnet, daß die das Aufschlußgefäß (2) vorübergehend aufnehmende Temperiervorrichtung (19) zum Angleichen der Temperatur des Aufschlußgefäßes (2) an die Temperatur der Wärmesenke (6) vor einer Messung mit der Rechen- und Steuereinrichtung (18) in Steuerverbindung steht und mit dem mindestens einen zweiten Temperatursensor verbunden ist.

3. Kalorimeter nach Anspruch 1 oder 2, dadurch gekennzeichnet, daß an der Wärmesenke (6) zwei zweite Temperatursensoren (12, 20) angeordnet sind, wobei der eine (20) mit der Temperiereinrichtung (19) und der andere (12) mit der Rechen- und Steuereinrichtung (18) verbunden ist.

4. Kalorimeter nach einem der Ansprüche 1 bis 3, dadurch gekennzeichnet, daß die Wärmesenke (6) aus einer Kombination von festen und flüssigen Materialien besteht.

## Claims

1. A bomb calorimeter with an decomposition vessel (2), the interior of which takes the form of a reaction chamber and is sealable, the decomposition vessel (2) being removably arranged in a jacket (6) and having at least one temperature sensor (5) for measuring the temperature reached in the decomposition vessel, wherein the jacket (6) surrounding the decomposition vessel (2) takes the form of a heat sink (6) and at least areas thereof consist of material of good thermal conductivity and high heat capacity, **characterized in that** the inside walls (9) and the outside walls (15) of the heat sink (6) are in spaced relationship to the outside walls (10) of the decomposition vessel (2) and inside walls of an outer casing (13) and compose thermal insulation spaces (11, 17), and that at least one second temperature sensor (12, 20) is located in the wall zone of the heat sink and is connected to a temperature-regulating device (19) for the decomposition vessel (2) and to an arithmetic and control unit (18).

2. A calorimeter as claimed in claim 1, characterized in that the temperature-regulating device (19) temporarily accommodating the decomposition vessel (2) and serving for adjusting the temperature of the decomposition vessel (2) to the temperature of the heat sink (6) prior to a measurement is connected for control to the arithmetic and control means (18) and is connected to the at least one second temperature sensor.

3. A calorimeter as claimed in either of claims 1 or 2, characterized in that two second temperature sensors (12, 20) are arranged at the heat sink (6), the one (20) being connected to the temperature-regulating device (19) and the other (12) being connected to the arithmetic and control means (18).

4. A calorimeter as claimed in any one of claims 1 to 3, characterized in that the heat sink (6) consists of a combination of solid and liquid materials.

## Revendications

1. Calorimètre à bombe présentant un vase de préparation (2) dont l'espace intérieur est conçu comme un espace de réaction et est verrouillable de façon étanche, dans lequel le vase de préparation (2) est disposé de façon détachable dans une chemise (6) et comprend au moins un détecteur de température (5) permettant de mesurer la température atteinte dans le vase de préparation, dans lequel la chemise (6), qui entoure le vase de préparation (2), est conçue comme un puits de chaleur (6) et se compose. au moins par zones, d'un matériau bon conducteur de chaleur et présentant une capacité thermique élevée, caractérisé en ce que les parois intérieures (9) et les parois extérieures (15) du puits de chaleur (6) sont écartées des parois extérieures (10) du vase de préparation (2) et des parois intérieures d'un boîtier extérieur (13) en formant des espaces d'isolation thermique (11, 17), et en ce que, dans la zone de paroi du puits de chaleur se trouve au moins un second détecteur de température (12, 20), qui est relié à un dispositif d'équilibrage de la température (19) pour le vase de préparation (2) et à une unité de calcul et de commande (18).

2. Calorimètre selon la revendication 1, caractérisé en ce que le dispositif d'équilibrage de la température (19) recevant temporairement le vase de préparation (2) et destiné à équilibrer la température du vase de préparation (2) en fonction de la température du puits de chaleur (6) avant une mesure est couplé à l'unité de calcul et de commande (18) et est au moins relié à un second détecteur de température.

3. Calorimètre selon la revendication 1 ou 2, caractérisé en ce que deux seconds détecteurs de température (12, 20) sont raccordés au puits de chaleur (6), où l'un (20) est relié au dispositif d'équilibrage de la température (19) et l'autre (12) est relié à l'unité de calcul et de commande (18).

4. Calorimètre selon l'une des revendications 1 à 3, caractérisé en ce que le puits de chaleur (6) se compose d'une combinaison de matériaux solides et liquides.
